# EUROPEAN PATENT SPECIFICATION

(11) **EP 1 547 340 B1**
(45) Date of publication and mention of the grant of the patent: **11.04.2007**
(21) Application number: 03794392.5
(22) Date of filing: 03.09.2003
(51) Int. Cl.: H04L 29/06, H04L 9/32

(54) **METHOD, SYSTEM AND COMPUTER PROGRAM PRODUCT FOR TRANSMITTING A MEDIA STREAM BETWEEN CLIENT TERMINALS**
VERFAHREN, SYSTEM UND COMPUTERPROGRAMMPRODUKT ZUM ÜBERTRAGEN EINES MEDIA-STROMS ZWISCHEN CLIENT-ENDGERÄTEN
PROCEDE, SYSTEME ET PRODUIT DE PROGRAMME INFORMATIQUE POUR TRANSMISSION D'UN TRAIN DE DONNEES DE MEDIA ENTRE TERMINAUX CLIENTS

(30) Priority: 06.09.2002 SE 0202638
(43) Date of publication of application: 29.06.2005
(73) Proprietor: Marratech AB, 164 21 Kista (SE)
(72) Inventor: PARNES, Peter, S-977 54 Luleaa (SE); PERSSON, Mikael, S-977 52 Luleaa (SE); AAGREN, Claes, S-975 96 Luleaa (SE)
(74) Representative: Herbjörnsen, Rut
(86) International application number: PCT/SE2003/001363
(87) International publication number: WO 2004/023760

(56) References cited:
- WO-A2-01/73522
- US-A- 5 898 830
- US-A1- 2002 023 143
- US-B1- 6 185 184

## Description

### Technical field of the invention

The present invention relates to a method of transmitting a media stream of data from a sending client terminal to a receiving client terminal which is protected by a protective means. More in detail, a method is disclosed for avoiding transmission of data to be restrained by a firewall or by an arrangement for network address translation.

### Background of the invention

So-called firewalls, shields or other types of protective security arrangements are installed in, or connected to most computer systems and communication networks of today. Unfortunately, such security arrangements may be necessary in order to keep undesired malicious attacks or insidiously hidden computer viruses away from a secure and therefore still uncontaminated branch of a network. An attack intended to cause destruction to a network or a computer virus that manages to pass by the security gates that protect a computer system may cause serious damage. The damage applies to an internal computer network or a residential computer system as well as to various electronic equipment related to it. As an alternative to a firewall, the user of a client terminal in a network may have a so-called network address translator, NAT, between his part of the network and the external network. The arrangement provides an additional obstacle for external users who wants information about the hidden IP-addresses behind the NAT arrangement and provides the user with a sufficient number of IP-addresses within his internal network.

A firewall and/or a network address translator are often arranged in a way that they allow traffic to enter into a protected zone only on condition that corresponding traffic has been transmitted out of that protected zone. For a situation when the communication channel has not been utilised for a period of time, the state of a firewall or network address translator changes from a data transmissible mode, i.e. from an open mode, to a locked mode (see document US-A-5 898 830).

One way of keeping the state open to data transmission is to instruct the particular firewall to open, or to maintain its open state while sending other data, but this solution is closely dependent on the specific type of firewall and the manufacturer of this firewall. Therefore, the prior art solution to the problem is too specific to be useful generally, and it is difficult to generalise the solution for applicability in a broader sense due to the amount of specifications necessary in order to achieve the desired general applicability.

Another way according to prior art technology is to instruct the administrator of a certain firewall arrangement to keep certain ports of the firewall open to transmission. Although this is one of the methods frequently used today, the method is uncertain and thus does not meet the rigorous security requirements placed upon state of the art computer systems and corporate security policies that are utilised by companies and public authorities.
See also document US-A-6 185 184.

### Summary of the invention

It is therefore an object of the present invention to alleviate the previously mentioned shortcomings of prior art associated with group communication services. This is accomplished by a method and corresponding system for transmitting a media stream of data from a sending client terminal to a receiving client terminal, the terminals being arranged in a protected computer environment including at least one protective means in association with a data forwarding means, which protective means is intended to protect the receiving client terminal from data transmitted from unauthorised sending clients, the method comprising the steps of:
transmitting authorisation data from the receiving client terminal to sending client terminal via the protective means for instructing the means to allow return of a media stream from the sending client terminal to the receiving client terminal during a predetermined period of time,
   characterised by:
   the receiving client terminal is adapted to independently transmit authorisation data via the protective means at shorter intervals than said predetermined period of time for maintaining the allow return mode of the protective means.

Firewalls are typically configured so as to decide which gates to be open and which to be closed. As an example, the firewall may be configured so as to allow traffic to return from a certain external client terminal only provided that data has been sent to this particular client terminal in advance from inside of the protected zone. This is called an "allow return" state.

By means of the present invention, termination of the transmissible state of the protective means in favour of an impermeable state is avoided. The termination is carried out in order to enhance security, but also cuts off meaningful data streaming into a network of computers. The present invention lets in useful data while still maintaining the required network security since firewalls do not have to be open for an incoming data stream more than necessary, in particular when considering the large number of different firewalls available on the market, each with different characteristics.

### Brief description of the drawings

The features, objects, and further advantages of this invention will become apparent by reading this description in conjunction with the accompanying drawings, in which like reference numerals refer to like elements and in which:
Fig 1 illustrates a schematic overview of the means required for transmitting a media stream of data according to the present invention.
Fig 2 is a signalling chart depicting the sequential method steps for transmitting a media stream of data according to the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims.

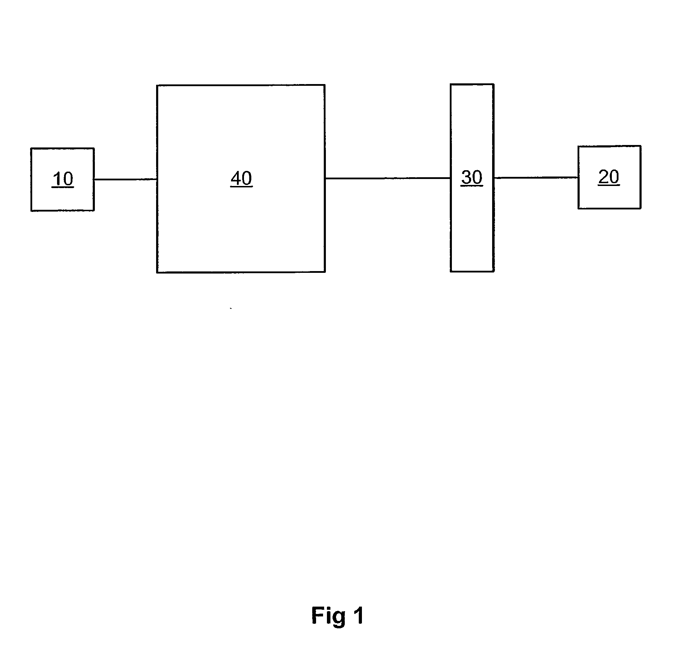

With reference to Fig 1, a schematic overview illustrates the means required for transmitting a media stream of data according to the present invention. A sending client terminal 10 is connected to a router 40, preferably via a global interconnecting computer network, such as the Internet. The router 40 may be any kind of data forwarding network means, such as a switch or a bridge between various units and client terminals in a communication network. The receiving client terminal 20 receives the transmitted media stream of data after the stream having passed a protective means 30 arranged in-between the router 40 and the receiving client terminal 20. The protective means 30 may be any kind of firewall-related hardware equipment or a software-based virus shield. One example of a protective means is a network address translator, NAT. The reason for arranging a network address translator may be that the user is not provided with a sufficient number of IP-addresses. By utilising a network address translator for instance between the user's residential network and the external network, this shortage of addresses is managed.

In accordance with one embodiment, the function of a network address translator is the following: a client terminal A is to establish communication with another client terminal B. Client terminal A is protected by a firewall and/or a network address translator 30. Client terminal B pays attention to signals that are input on its gate number "x". When executing the signalling, client terminal A is about to transmit a signal from gate number "y" to client B's gate number "x". However, the firewall and/or network address translator arrangement 30 restrains this packet and retransmits it from a gate number "z" of the protective means 30 to gate number "y" of the client terminal A. Now, there has been established a state in the firewall and/or NAT 30 with a mapping of a gate on the external side from gate "z" of the protective means 30 to gate "y" of client terminal A, i.e. client terminal B now transmits data to gate "z" and the firewall and/or NAT translates this to port "y" of client terminal A. In order to maintain the allow return mode, client terminal A must continuously transmit information to client terminal B through the firewall and/or network address translation arrangement 30.

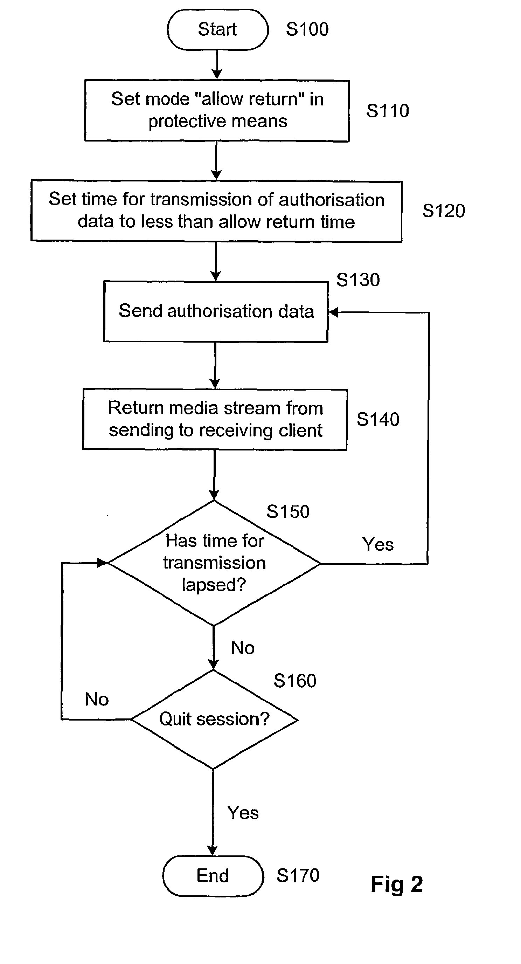

With reference to Fig 2, a signalling chart is depicting the sequential method steps for transmitting a media stream of data from the sending client terminal 10 to the receiving client terminal 20 in accordance with the invention. The sequence begins (S100) with setting (S110) the transmission state of the protective means 30 by to an "allow return" mode by sending authorising instructions to the protective means 30 from the receiving client terminal 20. The allow return mode is often already set by default on protective means by the manufacturer. There are also firewalls which only can operate according to the allow return rule. Next step is to set (S120) the intervals of sending authorisation data to a period of time which is less than the predetermined period of time for return data is allowed. Authorisation data is sent (S130) from the receiving client terminal 20 to the protective means 30 in accordance with the above intervals. This means the time for which the media stream of data originating from the sending client terminal 10 is allowed to pass the protective means 30 in order to reach the receiving client terminal 20. This step is followed by transmission (S 140) the media stream of data from the sending client terminal 10 to the receiving client terminal 20, the media stream passing through the permeable protective means 30 of the receiving client terminal 20, which protective means is not yet closed for the incoming media stream due to the allow return mode. Subsequently, it is determined (S150) by means of the sending client terminal 10 whether the predetermined period of time between each transmission of authorisation data has lapsed. In case the time has lapsed, the sequence returns back to transmitting (S130) authorisation data and otherwise continues towards a user inquiry. This user inquiry (S150) relates to whether the user of the method according to the invention wants to quit and thereby end (S160) the session of information exchange or not. If not, the sequence returns back to the previous step of determining whether the predetermined period of time has lapsed (S140).

In accordance with the present invention, software is developed in parallel with the method of transmitting a media stream of data. The software resides in a memory associated with the means for transmitting according to Fig 1. The software is designed for instructing the hardware to carry out the sequential method steps previously described in this application with particular reference to Fig 2.

## Claims

1. Method for transmitting a media stream of data from a sending client terminal (10) to a receiving client terminal (20), the terminals being arranged in a protected computer environment including at least one protective means (30) in association with a data forwarding means (40), which protective means is intended to protect the receiving client terminal from data transmitted from unauthorised sending clients, the method comprising the steps of:
transmitting authorisation data from the receiving client terminal to the sending client terminal via the protective means for instructing the means to allow return of a media stream from the sending client terminal to the receiving client terminal during a predetermined period of time,
**characterised by**
the receiving client terminal is adapted to independently transmit authorisation data via the protective means at shorter intervals than said predetermined period of time for maintaining the allow return mode of the protective means.

2. Method of transmitting a media stream according to claim 1, **characterised by**
the protective means being a firewall arrangement.

3. Method of transmitting a media stream according to claim 1, **characterised by**
the protective means being a network address translator, NAT.

4. Method of transmitting a media stream according to claim 1, **characterised by**
the data forwarding means being a router, switch or bridge between client terminals in a communication network.

5. System for transmission of a media stream of data from a sending client terminal (10) to a receiving client terminal (20), the terminals being arranged in a protected computer environment including at least one protective means (30) in association with a data forwarding means (40), which protective means is intended to protect the receiving client terminal from data transmitted from unauthorised sending clients, the system comprising:
means for transmission of authorisation data from the receiving client terminal to the sending client terminal via the protective means, the authorisation data instructing the protective means to allow return of a media stream from the sending client terminal to the receiving client terminal during a predetermined period of time,
**characterised in that**
the receiving client terminal being adapted to independently transmit authorisation data via the protective means at shorter intervals than said predetermined period of time for maintaining the allow return mode of the protective means.

6. System for transmission of a media stream according to claim 5, **characterised in that**
the protective means is a firewall arrangement.

7. System for transmission of a media stream according to claim 5, **characterised in that**
the protective means is a network address translator, NAT.

8. System for transmission of a media stream according to claim 5, **characterised in that**
the data forwarding means is a router, switch or bridge between client terminals in a communication network.

9. Computer program product for transmitting a media stream of data from a sending client terminal (10) to a receiving client terminal (20), the terminals being arranged in a protected computer environment including at least one protective means (30) in association with a data forwarding means (40), which protective means is intended to protect the receiving client terminal from receiving data transmitted from unauthorised sending clients,
**characterised in that**
the computer program product is adapted for carrying out the method steps of anyone of claims 1-4.

## Patentansprüche

1. Verfahren zum Übertragen eines Media-Datenstroms von einem sendenden Client-Endgerät (10) an ein empfangendes Client-Endgerät (20), wobei die Endgeräte in einer geschützten Computerumgebung angeordnet sind, die zumindest eine Schutzeinrichtung (30) in Verbindung mit einer Datenweiterleitungseinrichtung (40) umfaßt, wobei die Schutzeinrichtung dafür gedacht ist, das empfangende Client-Endgerät vor Daten zu schützen, die von unberechtigt sendenden Clients übertragen werden, wobei das Verfahren die folgenden Schritte aufweist:
Senden von Berechtigungsdaten von dem empfangenden Client-Endgerät an das sendende Client-Endgerät über die Schutzeinrichtung, um die Einrichtung anzuweisen, daß sie die Rücksendung eines Media-Stroms von dem sendenden Client-Endgerät an das empfangende Client-Endgerät während einer vorbestimmten Zeitspanne zuläßt,
**dadurch gekennzeichnet, daß**
das empfangende Client-Endgerät geeignet ist, in kürzeren Intervallen als der vorbestimmten Zeitspanne unabhängig Berechtigungsdaten über die Schutzeinrichtung zu senden, um die Rücksendungserlaubnis-Betriebsart der Schutzeinrichtung beizubehalten.

2. Verfahren zum Übertragen eines Media-Stroms nach Anspruch 1, **dadurch gekennzeichnet, daß** die Schutzeinrichtung eine Firewall-Anordnung ist.

3. Verfahren zum Übertragen eines Media-Stroms nach Anspruch 1, **dadurch gekennzeichnet, daß** die Schutzeinrichtung ein Netzwerkadressenumsetzer NAT ist.

4. Verfahren zum Übertragen eines Media-Stroms nach Anspruch 1, **dadurch gekennzeichnet, daß** die Datenweiterleitungseinrichtung ein Router, ein Switch oder eine Bridge zwischen Client-Endgeräten in einem Kommunikationsnetzwerk ist.

5. System zum Übertragen eines Media-Datenstroms von einem sendenden Client-Endgerät (10) an ein empfangendes Client-Endgerät (20), wobei die Endgeräte in einer geschützten Computerumgebung angeordnet sind, die zumindest eine Schutzeinrichtung (30) in Verbindung mit einer Datenweiterleitungseinrichtung (40) umfaßt, wobei die Schutzeinrichtung dafür gedacht ist, das empfangende Client-Endgerät vor Daten zu schützen, die von unberechtigt sendenden Clients übertragen werden, wobei das System aufweist:
eine Einrichtung zum Senden von Berechtigungsdaten von dem empfangenden Client-Endgerät an das sendende Client-Endgerät über die Schutzeinrichtung, wobei die Berechtigungsdaten die Schutzeinrichtung anweisen, die Rücksendung eines Media-Stroms von dem sendenden Client-Endgerät an das empfangende Client-Endgerät während einer vorbestimmten Zeitspanne zuzulassen,
**dadurch gekennzeichnet, daß**
das empfangende Client-Endgerät geeignet ist, in kürzeren Intervallen als der vorbestimmten Zeitspanne unabhängig Berechtigungsdaten über die Schutzeinrichtung zu senden, um die Rücksendungserlaubnis-Betriebsart der Schutzeinrichtung beizubehalten.

6. System zum Übertragen eines Media-Stroms nach Anspruch 5, **dadurch gekennzeichnet, daß** die Schutzeinrichtung eine Firewall-Anordnung ist.

7. System zum Übertragen eines Media-Stroms nach Anspruch 5, **dadurch gekennzeichnet, daß** die Schutzeinrichtung ein Netzwerkadressenumsetzer NAT ist.

8. System zum Übertragen eines Media-Stroms nach Anspruch 5, **dadurch gekennzeichnet, daß** die Datenweiterleitungseinrichtung ein Router, ein Switch oder eine Bridge zwischen Client-Endgeräten in einem Kommunikationsnetzwerk ist.

9. Computerprogrammprodukt zum Übertragen eines Media-Datenstroms von einem sendenden Client-Endgerät (10) an ein empfangendes Client-Endgerät (20), wobei die Endgeräte in einer geschützten Computerumgebung angeordnet sind, die zumindest eine Schutzeinrichtung (30) in Verbindung mit einer Datenweiterleitungseinrichtung (40) umfaßt, wobei die Schutzeinrichtung dafür gedacht ist, das empfangende Client-Endgerät vor dem Empfang von Daten zu schützen, die von unberechtigt sendenden Clients übertragen werden,
**dadurch gekennzeichnet, daß**
das Computerprogrammprodukt geeignet ist, die Verfahrensschritte nach einem der Ansprüche 1 - 4 auszuführen.

## Revendications

1. Procédé de transmission d'un flux de données multimédia depuis un terminal client d'émission (10) vers un terminal client de réception (20), les terminaux étant agencés dans un environnement informatique protégé comprenant au moins des moyens de protection (30) en association avec des moyens d'acheminement de données (40), lesquels moyens de protection sont destinés à protéger le terminal client de réception vis-à-vis de données transmises par des clients émetteurs non autorisés, le procédé comprenant les étapes consistant à :
transmettre des données d'autorisation depuis le terminal client de réception vers le terminal client d'émission par l'intermédiaire des moyens de protection pour instruire les moyens de permettre le retour d'un flux de données multimédia en provenance du terminal client d'émission vers le terminal client de réception pendant une période prédéterminée,
**caractérisé par le fait que**
le terminal client de réception est adapté pour transmettre indépendamment des données d'autorisation par l'intermédiaire des moyens de protection à intervalles plus courts que ladite période prédéterminée pour maintenir le mode de permission de retour des moyens de protection.

2. Procédé de transmission d'un flux de données multimédia selon la revendication 1, **caractérisé par le fait que**
les moyens de protection sont un agencement de coupe-feu.

3. Procédé de transmission d'un flux de données multimédia selon la revendication 1, **caractérisé par le fait que**
les moyens de protection sont un traducteur d'adresses de réseau (NAT).

4. Procédé de transmission d'un flux de données multimédia selon la revendication 1, **caractérisé par le fait que**
les moyens d'acheminement des données sont un routeur, un commutateur ou un pont entre les terminaux client dans un réseau de communications.

5. Système de transmission d'un flux de données multimédia depuis un terminal client d'émission (10) vers un terminal client de réception (20), les terminaux étant agencés dans un environnement informatique protégé comprenant au moins des moyens de protection (30) en association avec des moyens d'acheminement de données (40), lesquels moyens de protection sont destinés à protéger le terminal client de réception vis-à-vis de données transmises par des clients émetteurs non autorisés, le système comprenant:
des moyens de transmission de données d'autorisation depuis le terminal client de réception vers le terminal client d'émission par l'intermédiaire des moyens de protection, les données d'autorisation instruisant les moyens de protection de permettre le retour d'un flux de données multimédia en provenance du terminal client d'émission vers le terminal client de réception pendant une période prédéterminée,
**caractérisé en ce que**
le terminal client de réception est adapté pour transmettre indépendamment des données d'autorisation par l'intermédiaire des moyens de protection à intervalles plus courts que ladite période prédéterminée pour maintenir le mode de permission de retour des moyens de protection.

6. Système de transmission d'un train de données multimédia selon la revendication 5, **caractérisé en ce que**
les moyens de protection sont un agencement de coupe-feu.

7. Système de transmission d'un train de données multimédia selon la revendication 5, **caractérisé en ce que**
les moyens de protection sont un traducteur d'adresses de réseau (NAT).

8. Système de transmission d'un train de données multimédia selon la revendication 5, **caractérisé en ce que**
les moyens d'acheminement des données sont un routeur, un commutateur ou un pont entre les terminaux client dans un réseau de communications.

9. Produit de programme informatique de transmission d'un flux de données multimédia depuis un terminal client d'émission (10) vers un terminal client de réception (20), les terminaux étant agencés dans un environnement informatique protégé comprenant au moins des moyens de protection (30) en association avec des moyens d'acheminement de données (40), lesquels moyens de protection sont destinés à protéger le terminal client de réception vis-à-vis de la réception de données transmises par des clients émetteurs non autorisés,
**caractérisé en ce que**
le produit de programme informatique est adapté pour exécuter les étapes du procédé selon l'une quelconque des revendications 1 à 4.
